# EUROPEAN PATENT SPECIFICATION

(11) **EP 1 441 945 B1**
(45) Date of publication and mention of the grant of the patent: **25.01.2006**
(21) Application number: 02789483.1
(22) Date of filing: 06.11.2002
(51) Int. Cl.: B64C 27/12, B64C 27/32, B64C 27/52, A63H 27/133

(54) **PROPELLERS, PROPELLER STABILIZERS, AND PROPELLER RELATED VEHICLES**
PROPELLER, PROPELLERSTABILISATOREN UND PROPELLER VERWENDENDE FAHRZEUGE
HELICES, STABILISATEURS D'HELICE, ET VEHICULES A HELICE

(30) Priority: 07.11.2001 US 337670 P; 14.01.2002 US 348891 P; 08.07.2002 US 189681; 23.10.2002 US 277844; 23.10.2002 US 277691
(43) Date of publication of application: 04.08.2004
(73) Proprietor: Rehco, LLC, Chicago, IL 60607 (US)
(72) Inventor: REHKEMPER, Jeffrey, Chicago, IL 60610 (US); JOHNSON, Keith, Des Plaines, IL 60018 (US); GRISOLIA, Nicholas, Chicago, IL 60618 (US); HARTLAUB, Charles, Glendale Heights, IL 60139 (US)
(74) Representative: Ruschke, Hans Edvard
(86) International application number: PCT/US2002/035692
(87) International publication number: WO 2003/039950

(56) References cited:
- GB-A- 303 819
- US-A- 2 510 006
- US-A- 2 552 651
- US-A- 2 650 667
- US-A- 2 684 122
- US-A- 3 391 746
- US-A- 4 604 075
- US-A- 4 728 311
- US-A- 4 759 689
- US-A- 4 881 874
- US-A- 5 381 988
- US-A- 5 511 947
- US-A- 6 006 517
- US-A- 6 086 016

## Description

### Field of the Invention

This invention relates generally to helicopters, and for most aspects of the present invention relate to helicopters designed for the toy or hobby industry.

### Background of the Invention

While the present invention is related in part to helicopters developed in the toy and hobby industry, there are many types of vehicles that use propellers as a source of lift or as a means for propulsion for which the present invention is applicable. The more common types of these vehicles, which use propellers as a source of propulsion or lift, are air/space based vehicles such as airplanes, helicopters, or unconventional aircraft. However, these vehicles are especially difficult to control and require complex programming and mechanics to operate and control the flight path. In most instances, controlling these vehicles to fly in a stable horizontal position takes countless hours of practice.

Examples of these prior art vehicles are found in the following U.S. Patents; U.S. Patent 5,609,312 is directed to a model helicopter that describes an improved fuselage with a structure that supports radio-control components, and drive train components in an attempt to provide a simple structure; U.S. Patent 5,836,545 is directed to a rotary wing model aircraft that includes a power distribution system that efficiently distributes engine power to the rotary wings and tail rotor system; U.S. Patent 5,879,131 is directed to a main propeller system for model helicopters, which are capable of surviving repeated crashes; and U.S. Patent 4,604,075 is directed to a toy helicopter that includes a removable control unit, which a user may plug into the toy helicopter. Helicopters with horizontal stabilizing means relying on centrifugal forces acting on the main propeller or rotor are known from US-A-2650667, US-A-2 510 006 or GB-A-303 819.

These toys use at least one propeller rotating in a substantially horizontal plane to create and sustain lift. One problem that arises is when the propellers are rotating in the horizontal plane, variations such as wind or power fluctuations may cause the propeller blades to pitch, which further causes the aircraft to tip, turn, oscillate or bank. This effect may be compensated for and corrected with complicated programming and mechanics. However, as mentioned above, these have a tendency to make the aircraft too expensive or too difficult to control, especially for children. The ability to even maintain horizontal stability in these aircrafts is extremely diffcult.

As such a need exists to improve these vehicles that utilize propellers to create and sustain lift to overcome the problems identified above. Such a need should be inexpensive and easy to implement. The outcome should further provide for vehicles that are easy to control or manipulate without the need for complex linkages, servos, gyros or other electromechanical devices.

In addition to the need to improve the stability and control of these vehicles, there is also an increased need to make such vehicles safer. Oftentimes a child or user is injured when the user comes in contact with a rotating propeller. As such there exists a further need to make the propellers safer.

In another object of the present invention, there is a continuing need to create vehicles that use alternate means for powering or driving the propellers. One such alternative means would be a pneumatic engine that runs off of pressurized gas, such as air.

### Summary of the Invention

In a first embodiment of the present invention, the helicopter has an airframe that houses a motor mechanism for powering a main propeller and a tail rotor. The main propeller is attached to a main drive shaft that extends vertically through the airframe. The helicopter further includes horizontal stabilizing means attached between the main propeller and the main drive shaft, which permits the main propeller to freely pivot about the main drive shaft independently from the airframe. As such when the main propeller is rotating and the main propeller begins to pitch, a centrifugal force created by the rotation of the main propeller, tends to pivot the main propeller about the horizontal stabilizing means in a manner that offsets the pitch such that the main propeller remains in a substantially horizontal position. The horizontal stabilizing means are defined in the characterizing part of claim 1.

In another embodiment, when the main propeller is rotating and begins to pivot about the main drive shaft, the horizontal stabilizing means tends to resiliently return the main propeller in a substantially horizontal position.

In one embodiment, the main propeller includes a pair of blades extending outwardly from the horizontal a stabilizing means. Each blade includes a leading edge, an end proximal to the stabilizing means, and a distal end. The main propeller also includes a safety arc attached to the proximal and distal ends of each blade and positioned in front of the leading edge of each blade. Furthermore, the safety arc has a diameter, which transitions from a relatively flat horizontal surface by the proximal end into a wider vertical surface by the distal end.

In another embodiment, the main propeller includes a pair of blades and a pair of flybars extending outwardly from a center portion of the main propeller that is further attached to a stabilizing means along a horizontal plane. Each blade has a leading edge, an end proximal to the stabilizing means and a distal end. A safety arc is also provided and attached to the proximal and distal ends of each blade and positioned in front of the leading edge of each blade. When the main propeller is rotating and the main propeller begins to pitch, the flybars, having a centrifugal force created by the rotation thereof, will tend to pivot the blades about the stabilizing means in a manner that offsets the pitch such that the main propeller remains in a substantially horizontal position.

In another embodiment, the main propeller includes a crossbar joint pivotally attached to a stabilizing means. The main propeller includes a pair of blades extending outwardly along a horizontal plane from the crossbar joint, wherein each blade has an end proximal to the crossbar joint and a distal end. A pair of crossbars extends outwardly from the crossbar joint along the horizontal plane. Each crossbar has an end proximally secured to the crossbar joint and an end distal thereto. A circular safety ring is secured to the distal ends of each crossbar and has pivots for receiving the distal ends of each blade. A flybar also extends outwardly along the horizontal plane from both the leading edge and the trailing edge defined in each blade. When the main propeller is rotating and the main propeller begins to pitch, the flybars, having a centrifugal force created by the rotation thereof, will tend to pivot the blades about the stabilizing means in a manner that offsets the pitch such that the main propeller remains in a substantially horizontal position.

In another embodiment, the main propeller includes a blade joint pivotally attached to a stabilizing means. Two pair of blades are extended outwardly along a horizontal plane from the blade joint, such that one pair of blades is perpendicular to the other pair of blades. Furthermore each pair of blades may pivot independently of the other pair. Each blade has an end proximal to the blade joint and a distal end. A circular safety ring includes pivots for receiving the distal ends of each blade. A flybar also extends outwardly from a leading edge defined in each blade. Wherein when the main propeller is rotating and the main propeller begins to pitch, the flybars, having a centrifugal force created by the rotation thereof, will tend to pivot the blades about the stabilizing means in a manner that offsets the pitch such that the main propeller remains in a substantially horizontal position.

In addition thereto the flybars may include weighted ends to increase the centrifugal force created by the rotation thereof.

In another embodiment of the present invention, a pneumatically driven helicopter has an airframe that houses a pneumatic motor mechanism, which is used to power a main propeller. A user can attach an external pump to an intake manifold defined on the pneumatic motor mechanism in order to pump and pressurize air inside of a reservoir. A pneumatic motor utilizes the pressurized air inside the reservoir to rotate a main drive shaft. A stabilizing means is attached between the main propeller and the main drive shaft. The stabilizing means permits the main propeller to rotate and freely pivot about the main drive shaft independently from the airframe. As such when the main propeller is rotating and the main propeller begins to pitch, a centrifugal force created by the rotation of the main propeller, tends to pivot the main propeller about the stabilizing means in a manner that offsets the pitch such that the helicopter remains in a substantially horizontal position.

Numerous advantages and features of the invention will become readily apparent from the following detailed description of the invention and the embodiments thereof, and from the accompanying drawings.

### Brief Description of the Drawings

A fuller understanding of the foregoing may be had by reference to the accompanying drawings, wherein:

FIG. 1 is a perspective view of a helicopter in accordance with the present invention, with a first stabilizing means and a first main propeller configured with two blades and half safety arcs in front of the leading edge of each blade;

FIG. 2 is an exploded view of the helicopter from FIG 1;

FIG. 3 is a perspective view of a combo gear that permits the internal cooling of the airframe;

FIG. 4 is a enlarged perspective view of the first stabilizing means in FIG 1;

FIG. 5 is a close-up view of a second stabilizing means, incorporating a resilient means of stabilizing the main propeller;

FIG. 6a is a close-up view of a third stabilizing means that incorporates a dual pivot arrangement;

FIG. 6b is an exploded view of FIG 6a;

FIG. 7 is a perspective view of a second main propeller configured with a pair of blades with half safety arcs and a pair of flybars extending outwardly from the center of the second main propeller;

FIG. 8 is a perspective view of a third main propeller configured with a pair of pivoting blades, two pair of flybars extending outwardly from the proximal ends of the blades, a crossbar, and a full circular safety ring;

FIG. 9 is a perspective view of a fourth main propeller configured with two pairs of pivoting blades (each pair perpendicular to each other and independently and pivotally attached to the helicopter), a full circular safety ring, and a flybar extending perpendicularly from the leading edge of each blade;

FIG. 10 is a perspective view of a fifth main propeller configured with a pair of blades and a pair of flybars both extending outwardly from the center of the fifth main propeller;

FIG. 11 is a perspective view of a sixth main propeller configured with a pair of blades and a crossbar bisecting the blades at the center of the sixth main propeller and further including a circular safety ring attached to the distal ends of the blades and crossbars;

FIG. 12 is a perspective view of embodiment relating to a pneumatically driven helicopter with a main propeller attached to a stabilizing means; and

FIG. 13 is a reverse exploded view of the helicopter from FIG 12.

### Detailed Description of the Invention

While the invention is susceptible to embodiments in many different forms, there are shown in the drawings and will be described herein, in detail, the preferred embodiments of the present invention. It should be understood, however, that the present disclosure is to be considered an exemplification of the principles of the invention and is not intended to limit the scope of the invention and/or the embodiments illustrated.

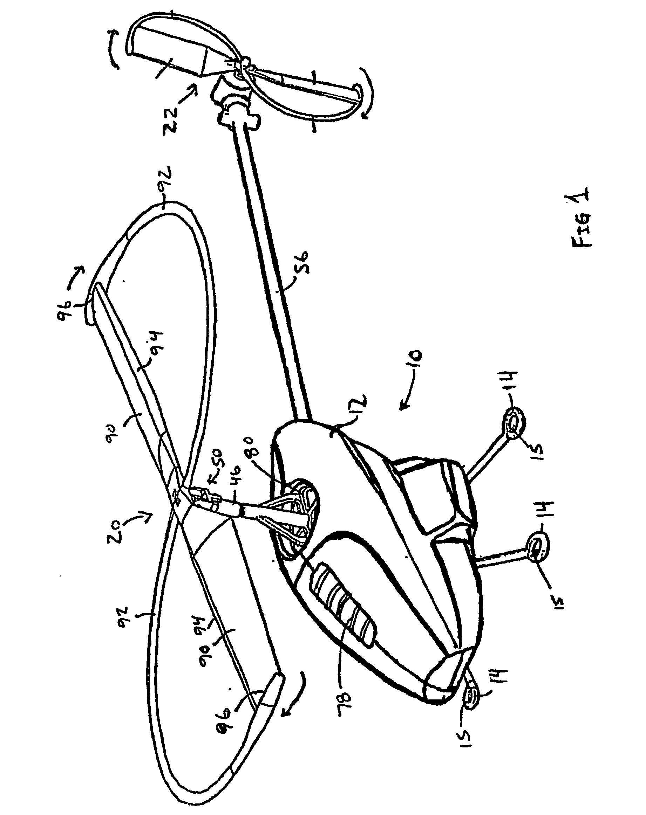

A first embodiment of the present invention, a helicopter 10, is depicted in FIG. 1. Like a typical helicopter the present embodiment includes an airframe 12 that houses any electronics and mechanical components as well as a chassis. Attached to the lower portion of the airframe 12 is landing gear 14 such that the helicopter 10 may rest on a given surface. The helicopter 10 includes a main propeller 20 and a tail rotor 22 for correcting counter-rotation. Both the main propeller 20 and the tail rotor 22 are powered by a motorized means, discussed in greater detail below. The actual design, shape or length of the main propeller 20 may vary with the size and weight of the helicopter 10, such that an appropriate amount of lift is generated for takeoff and sustained flight. The tail rotor 22 rotates at a pre-determined rotation that offsets the torque created by the main propeller 20 when the main propeller 20 is rotating at a maximum revolution per minute (Max RPM). The pre-determined rotation is determined upon a number of factors well known in the art.

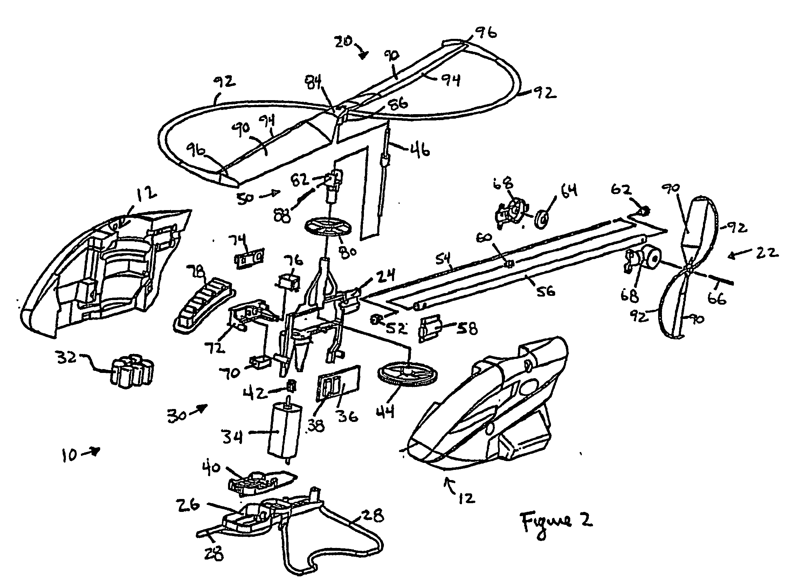

Referring now to FIG 2, an exploded view of the helicopter 10 in accordance with the first embodiment is illustrated. The helicopter 10 as mentioned includes an airframe 12 and a main propeller 20 and a tail propeller or rotor 22. The airframe 12 is preferably a two piece housing that secures a two piece chassis defined as an upper chassis 24 and a lower chassis 26. The lower chassis 26 secures the landing gear 14 (FIG 1) or as illustrated in FIG 2, a landing skid 28.

The motorized means 30 includes a power supply 32, such as a battery pack, that powers a motor mechanism 34. The motorized means 30 is controlled through a circuit board 36. A transmitter/receiver 38 may also be employed such that the helicopter 10 may be remotely operated. The power supply 32 is accessible through a door 40 in the lower chassis 26. As described in greater detail below the vehicle may also use alternate powering means such as but not limited to pneumatic motor mechanisms, which would eliminate the need for a motorized means to provide power to the main propeller.

The motor mechanism 34 drives a motor pinion 42 that is meshed to a combo crown gear 44. The combo crown gear 44 is rotatably mounted in the upper chassis 24. The combo crown gear 44 is also mounted to one end of a main drive shaft 46. The main drive shaft 46 extends upwardly from the combo crown gear 44 through the upper chassis 24. The other end of the main drive shaft 46 is attached to the main propeller 20 via a means for stabilizing the helicopter in a horizontal position (referred to herein as a first stabilizing means 50) discussed in greater detail below.

As mentioned above, the tail rotor 22 is also driven by the motorized means 30. The crown portion of the combo crown gear 44 is meshed to a tail rotor pinion 52, which rotates a tail drive shaft 54 that is mounted thereto. A tail boom 56 is clamped by a boom clamp 58, or otherwise secured, to the upper chassis 24. For stability a tail bushing 60 is positioned within the tail boom 56. The other end of the tail drive shaft 54 is mounted to a tail rotor rear pinion 62. The tail rotor rear pinion 62 is meshed to and drives a tail rotor crown gear 64, which spins a tail rotor axle 66. The tail rotor 22 is secured onto the tail rotor axle 66 such that when the tail drive shaft 54 rotates, the tail rotor 22 rotates. A tail rotor gear housing 68 is positioned to enclose the tail rotor crown gear 64, the tail rotor rear pinion 62 and the tail rotor axle 66.

The helicopter 10 may be turned on/off via a switch 70 mounted through a mounting plate 72 alongside the airframe 12 of the helicopter 10. The on/off switch 70 may also include an access cover 74 such that the switch 70 is not accidentally hit, for instance if the helicopter 10 crashes. In addition, the power supply 32 may be rechargeable through a charging jack 76. The helicopter 10 may include vents 78 to permit air to cool the motorized means 30 or power supply 32 when running. The ventilation or cooling process is further accomplished by the unique and novel combo gear 44.

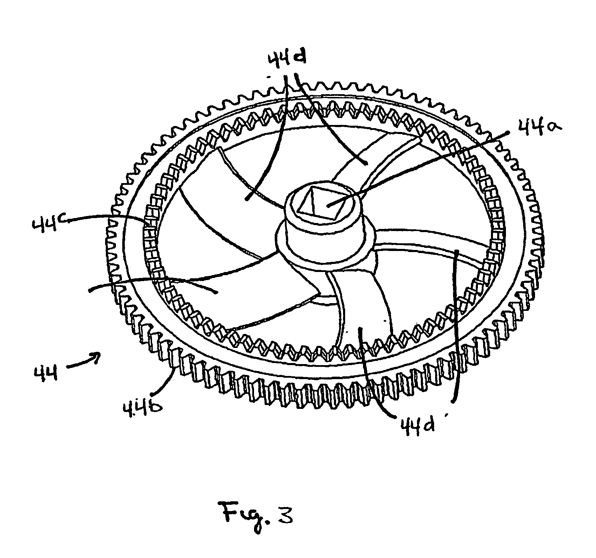

As further illustrated in FIG. 3, the combo gear 44 includes a centered bore 44a that permits the combo gear 44 to mount to the upper chassis 24 and the main drive shaft 46. The combo gear 44 also includes outside gearing 44b that meshes to the motor pinion 42 and crown gearing 44c that meshes to the tail rotor pinion 52. The combo gear 44 further includes fan blades 44d that are positioned such that when the combo gear 44 is rotated by the motor pinion 42 the fan blades 44d draw air through the vents 78 into the chassis. Thereby cooling the internal components of the propeller related vehicle.

Continuing to refer to FIG. 2, to further stabilize the upper chassis 24, a grill 80 is positioned over the upper chassis 24 such that the grill 80 may be received by an inside area of the airframe 12, when assembled.

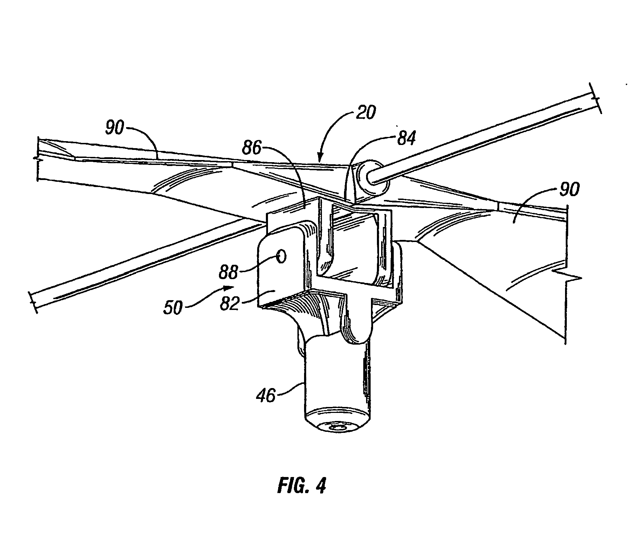

The stabilizing means 50 is defined by mounting the main propeller 20 on a freely pivotal main rotor head 82 (FIG. 4). The main rotor head 82 permits the main propeller 20 to pivot about its center 84. In addition, the rest of the helicopter 10 below the freely pivotal main rotor head 82 can pivot as a pendulum. The main rotor head 82, preferably a U-shaped joint, is secured to a rotor mount 86 that is further secured to the underside of the main propeller 20. The rotor mount 86 is pivotally attached to the main rotor head 82, via a pivot pin 88. The main rotor head 82 is mounted to the main drive shaft 46 such that when the main drive shaft 46 rotates, the main rotor head 82 rotates. This causes the rotor mount 86 to spin, rotating the main propeller 20. It is important to note that the main propeller 20 is preferably mounted such that the main propeller blades 90 are mounted parallel to the pivot point 88. This allows the main propeller 20 to pivot in the same direction as the blades 90, so the blades 90 can self regulate.

Continuing to refer to FIG. 2, a first main propeller embodiment 20 also depicted in FIG. 1 includes a pair of blades 90 with a pair of safety arcs 92 in front of the leading edges 94 of both blades 90. Each safety arc 92 starts at the center 84 of the main propeller 20 and moves away from the leading edge 94 of the blade in either a circular or elliptical pattern. The safety arcs 92 then join with the outer edge or distal end 96 of the respective blade 90. As the safety arcs 92 move outwardly toward the distal end 96 of the blades 90, it transitions from a relatively flat horizontal surface into a broader, wider vertical surface. The safety arc 92 and the widening of the safety arc 92 increases the surface area, which also serves to distribute a force of any impact over a wider area; thereby protecting the blades 90 upon impact. In addition, when operated by a child the safety arc 92 prevents a child from having a hand or eye scratched by the distal end 96 of a blade 90. In addition the tail rotor 22 may have the same configuration as the main propeller 20.

The safety arcs 92 in conjunction with the fact that the main propeller 20 is freely and pivotally attached to the helicopter 10 provides a helicopter that is self-stabilizing, in other words the main propeller 20 is kept in a substantial horizontal position when the helicopter 10 is operating. It is well known that in true helicopter flight, as the helicopter gains airspeed, the leading edge of the main propeller facing forward and rotating to the back of the helicopter, lifts more than the opposite blade. This causes the helicopter to bank, in the unequal lift. In the present main propeller embodiment 20, the safety arcs 92 create a centrifugal force that tends to offset a pitch force exhibited by the main propeller 20 when rotating, such that the main propeller 20 has a tendency to remain in substantially the same plane. The weight of the safety arcs 92 also adds weight to the blades 90 to provide a greater gyroscopic effect that stabilizes the main propeller 20.

When the main propeller 20 rotates, if the main propeller 20 begins to pitch, the safety arcs 92 will begin to move off of the horizontal plane. The weight of the safety arcs however, create a gyroscopic effect causing the main propeller 20 to level out by pivoting the blades 90 about the pivot pin 88 in the first stabilizing means 50. The blades 90 pivot along the changing pitch of the main propeller 20 such that the main propeller 20 returns to rotating in a substantially horizontal plane. Thereby stabilizing the helicopter 10 horizontally, keeping it level and in substantially the same position. Similarly, if the body of the helicopter 10 (below the first stabilizing means 50) begins to sway the first stabilizing mean 50 will similarly compensate and return the helicopter to a substantially horizontal position. As such, the present invention provides a novel mechanical means for compensating for any change in the horizontal position of the helicopter without the need for expensive servos and programming.

During operation, the present invention will allow the helicopter 10 to lift straight up and maintain a hover or stationary position. The helicopter 10 may include several forms of control, starting with no control or "free flight," or it may be outfitted with electronics having a microprocessor for "preprogrammed" or "programmable" flight or it may be outfitted with a radio receiver for use with a hand held remote transmitter or it may be any combination of the above.

As mentioned above, the tail rotor 22 rotates at a pre-determined rotation that offsets the torque created by the main propeller 20, when the main propeller 20 is rotating at a Max RPM. With a simple inexpensive remote control unit, a user may be able to adjust the speed of the main propeller 20. If the user decreases the speed of the main propeller 20, the tail rotor 22 will be rotating at a rate such that its counter rotation force is different during deceleration then what is required to keep the helicopter 10 from rotating at Max RPM or during acceleration. As such the helicopter 10 will begin to rotate about the main drive shaft 46, providing the user with a simple means of rotating or turning the helicopter 10.

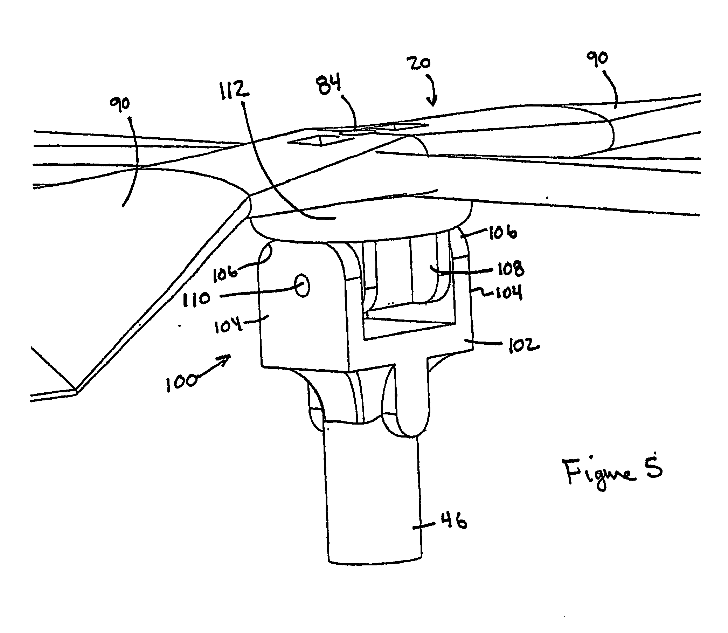

Referring now to FIG 5, another or second stabilizing means 100 is illustrated as being attached to a main drive shaft 46. The second stabilizing means 100 includes a shaft joint 102 secured to the end of the main drive shaft 46. The shaft joint 102 includes leg portions 104 that may be rounded about the ends 106. The shaft joint 102 is sized to receive a propeller joint 108, which is attached to the center 84 of the main propeller 20. The two joints 102 and 108 are pivotally attached together about a pivot pin 110. Fitted around the propeller joint 108 and positioned between the ends 106 of the shaft joint 102 and the main propeller 20 is a stabilizer or resilient O-ring 112.

When the main propeller 20 is rotating and the main propeller 20 begins to pivot away from a substantially horizontal plane, the ends 106, of the shaft joint 102, press into a portion of the resilient O-ring 112. As the O-ring 112 tends to maintain its original form, the resiliency of the O-ring 112 exerts a reactionary force on the shaft joint 102. This in turn causes the main propeller 20 to pivot in an opposite direction, which eventually places the main propeller in a substantially horizontal plane or position. The reactionary force may also overcompensate, causing the main propeller 20 to pivot past the horizontal plane, which will cause the ends 106, of the shaft joint 102, to press into another portion of the O-ring 112. However, a new reactionary force would then compensate for this creating a diminishing oscillation or vacillation until the main propeller is in a substantially horizontal plane.

In addition, it is preferable to align the blades 90 of the main propeller 20 along a perpendicular plane to the pivot-plane. Thereby, when the main propeller 20 includes flybars (as described herein below), the flybars will help increase stability maintained by the second stabilizing means 100.

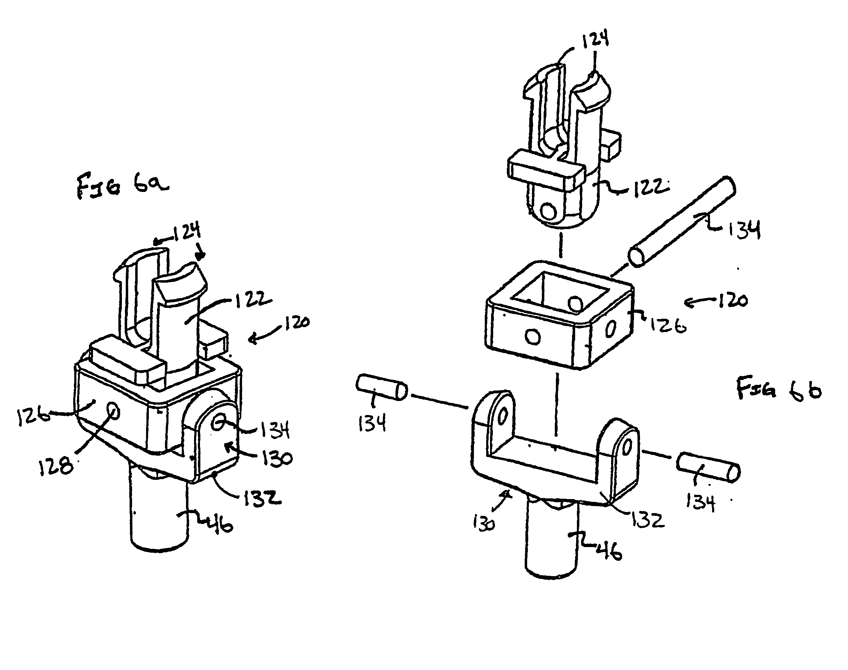

Referring now to FIGS 6a and 6b, another or third stabilizing means 120 is illustrated. The third stabilizing means 120 is connected between a main drive shaft 46 and a main propeller 20 (not shown). The third stabilizing means 120 includes a freely pivotal rotor attachment 122 that permits the main propeller 20 to pivot about its center of rotation. In addition, the rest of the helicopter 10 below the rotor attachment 122 can pivot as a pendulum. The rotor attachment 122 includes clips 124 that frictionally engage a center portion of the main propeller 20. The rotor attachment 122 is pivotally attached to a pivot joint 126 by a first pivot pin 128, which permits the rotor attachment 122 to pivot in a first pivot direction. The pivot joint 126 is also secured to a U-shaped portion 132, defined by a yoke 130, by a pair of pivot pins 134 and in a second pivot direction.

It is important to note that the main propeller 20 is preferably mounted to the rotor attachment 122 such that the main propeller blades 90 are parallel to the first pivot direction about the first pivot pin 128. This allows the main propeller 20 to pivot in the same direction as the blades 90, so the blades 90 when pitching or banking help self-regulate the main propeller 20. Furthermore, the first and second pivot directions are preferably perpendicular to each other to allow the main propeller 20 to pivot perpendicularly from the helicopter 10.

When the main propeller 20 rotates, the rotating main propeller 20 creates a normal centrifugal force. If the main propeller 20 begins to pitch the third stabilizing means 120 along with this normal centrifugal force creates a gyroscopic effect that causes the main propeller 20 to level out. The leveling out effect is achieved when the main propeller 20 begins to pivot about the first pivot direction. The main propeller 20 will pivot along a changing pitch (created in the gyroscopic effect) such that the main propeller 20 returns to rotating in a substantially horizontal plane; thereby stabilizing the helicopter 10 horizontally, keeping it level. Similarly, if the body of the helicopter 10 (below the stabilizing means) begins to sway, the third stabilizing mean 120 will similarly compensate and return the helicopter 10 to a substantially horizontal position.

In each of the three disclosed stabilizing means, the present invention provides a novel mechanical means for compensating for any change in the horizontal position of the helicopter without the need for expensive servos and programming.

In addition, the stabilizers disclosed herein are applicable to an aircraft having one or more propellers that rotate in a horizontal plane, either powered or freely rotatable. Each propeller is attached to a corresponding shaft that extends vertically through the airframe. The aircraft further includes a stabilizing means (as described herein) that is attached between each propeller and the corresponding shaft. The stabilizing means permits the propeller to pivot in relation to the corresponding shaft. However, when a propeller that is rotating begins to pivot, the stabilizing means offsets the pivot such that the propeller remains in a substantially horizontal plane.

In other embodiments of the present invention, the helicopter may include various main propellers and tail rotors. In addition, each main propeller and/or tail rotor may be attached to one of the disclosed stabilizing means.

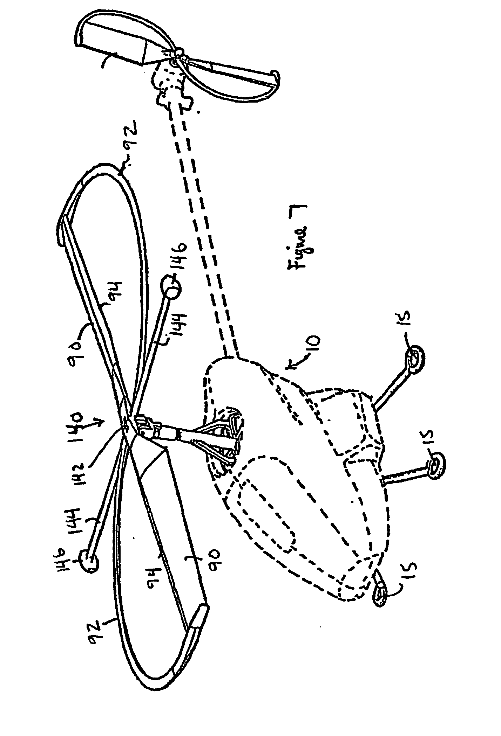

Referring now to FIG. 7, a second main propeller embodiment 140 is shown attached to a helicopter 10. The second main propeller 140 includes a pair of opposing positioned blades 90 with safety arcs 92, either elliptical or circular, in front of the leading edges 94 of both blades 92. In addition, extending outwardly from the center 142 of the main propeller 140 is a pair of flybars 144 with weighted ends 146. The flybars 144 add extra stability to the main propeller 140 and also reduce the effect wind may have on the main propeller 140. When the main propeller 140 is rotating, centrifugal force pulls the weighted ends 146 of the flybars 144 straight out, making the main propeller 140 more stable by reducing the ease the main propeller 140 may pivot during operation. The helicopter 10, illustrated in this embodiment may also include a tail rotor 22 configured similarly to previous helicopter 10 depicted in FIG. 1.

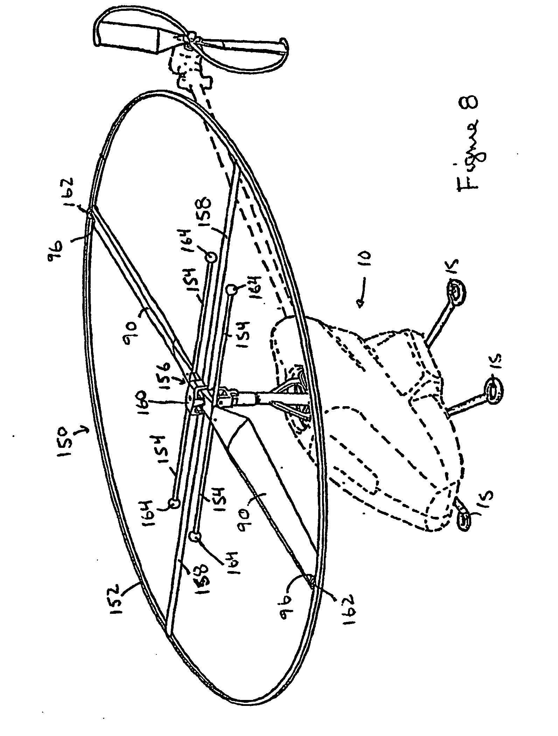

Referring now to FIG. 8, in another embodiment of the main propeller or third main propeller embodiment 150, the third main propeller 150 includes two pivoting two blades 90, a full circular safety ring 152 and two pairs of flybars 154. The safety ring 152 is secured to the center 156 of the third main propeller 150 by a pair of crossbars 158. The crossbars 158 attach to a crossbar joint 160 at the center 156 of the third main propeller 150. The safety ring 152 includes pivots 162 that receive the ends 96 of the blades 90 that are distal to the center 156 of the third main propeller 150. The pivots 162 and the crossbar joint 160 permit the blades 90 to pivot independently from the safety ring 152. The two pair of flybars 154 are attached to the ends of the blades 90, which are proximal to the center 156 of the third main propeller 150. In addition, the flybars 154 may also include weighted ends 164. Since the flybars 154 are secured to the blades 90, the flybars 154 will pivot with the blades 90.

The flybars 154, in conjunction with the single axis pivot of the blades 90 will help keep the third main propeller 150 in equilibrium when the third main propeller is spinning. As mentioned above in previous propeller embodiments, when the propeller is rotating, the blades 90 will pivot to compensate for any banking or unequal lift forces. In addition, when rotating, the centrifugal force will pull the weighted ends 164 on the flybars 154 outwardly making the blades 90 more stable by reducing the ease the blades 90 may pivot. Additionally, even if the flybars 154 did not include weighted ends the centrifugal force would still pull on the flybars 154 themselves, increasing the stability of the third main propeller 150.

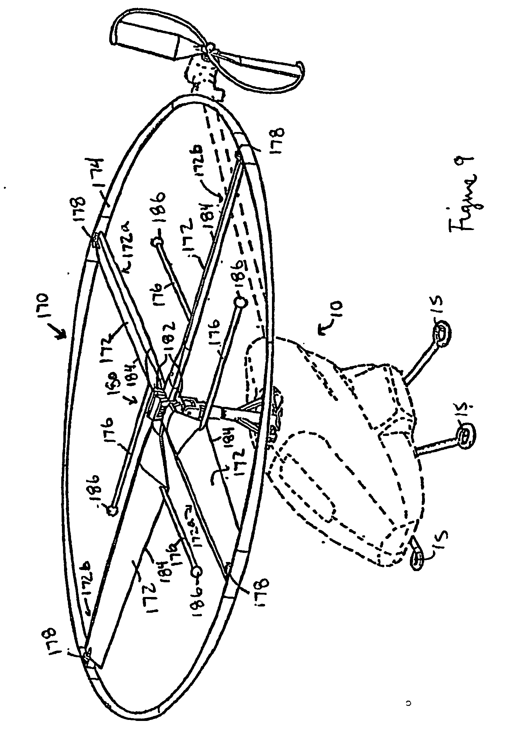

In another embodiment, FIG. 9, the helicopter 10 utilizes a fourth main propeller embodiment 170 that has four pivoting blades 172 with a full circular safety ring 174 and flybars 176 attached separately to each blade 172. The blades 172 are arranged in two pairs (172a and 172b); each pair (127a and 172b) is set perpendicular to each other. The safety ring 174 includes four pivots 178, each positioned to receive an end of a blade 172 that is distal from the center 180 of the fourth main propeller 170. The center 180 includes a double joint 182 that acts in concert with the pivots 178 such that the two pairs (172a and 172b) of blades 172 may pivot independently of each other. Extending outwardly from the leading edge 184 of each blade 172 is a flybar 176, which may include a weighted end 186.

The dual-axis pivot created by the two pairs (172a and 172b) of independently pivoting blades 172 helps keep the fourth main propeller 170 in equilibrium when rotating. In addition, when the fourth main propeller is rotating, a centrifugal force pulls the flybars 176, and especially the weighted ends 186, outwardly increasing stability by reducing the amount of pivot the blades 172 may exhibit.

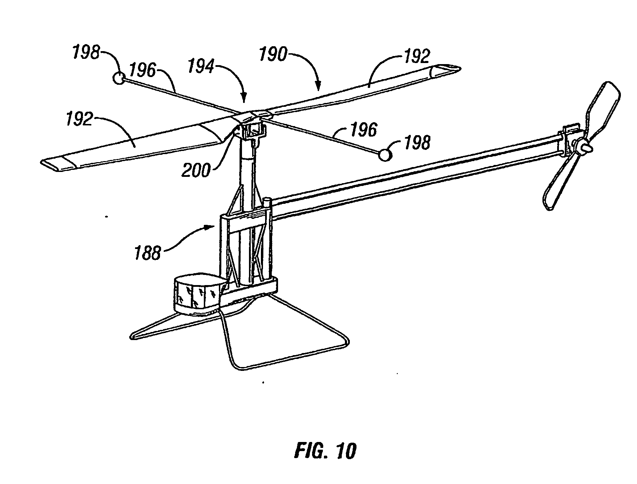

In yet another embodiment of the present invention, as depicted in FIG. 10, a helicopter 188 includes a fifth main propeller embodiment 190. The helicopter 188 may also be similar to any one of the helicopter embodiments mentioned above or herein below. The fifth main propeller 190 includes a pair of blades 192 connected at the center 194, of the fifth main propeller 190, to a stabilizing means 200. A pair of perpendicular flybars 196 bisects the main propeller 190 also at the center 194. Each flybar 196 may also include weighted ends 198. When the main propeller 190 and flybars 196 rotate, the main propeller 190 may begin to pitch causing the flybars 196 to move off of the horizontal plane. The weighted ends 198 create a gyroscopic effect causing the flybars 196 to level out by pivoting about the stabilizing means 200. This causes the main propeller 190 to pivot along the flybars' 196 axis, which changes the pitch of the main propeller 190 such that the blades 192 and the flybars 196 return to rotating in the same horizontal plane. Thereby stabilizing the helicopter 188 horizontally, keeping it level and in the same position.

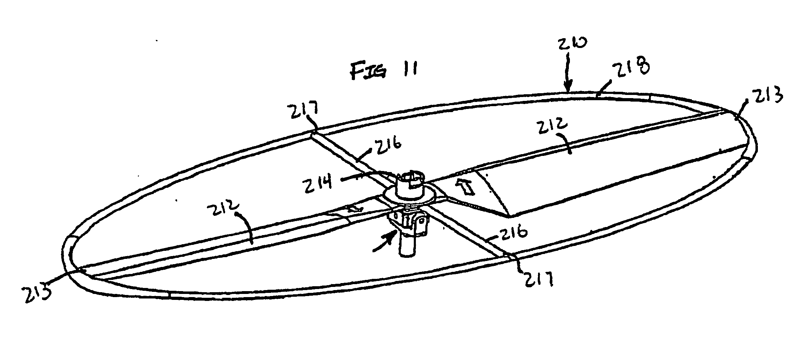

Referring now to FIG 11, a sixth main propeller embodiment 210 includes a pair of blades 212 that extend outwardly from a center support 214. A pair of crossbars 216 also extends outwardly from the center support 214 and are perpendicular to the blades 212. To protect a user from and to protect the blades and crossbars when they are rotating, a circular safety ring 218 is secured to the ends 213 of the blades 212 and the ends 217 of the crossbars 216.

As should be readily apparent from the above description each of the main propellers described above may be and preferably is mounted to a stabilizing means, increasing the ability to keep the helicopter in a level horizontal plane during operation. However, the propellers may also be incorporated onto a helicopter that does not include a stabilizing means, as each of the main propellers described above, by themselves, assist in keeping a helicopter in a substantially horizontal plane.

As illustrated in FIGS 1 and 7-9, the landing gear 14 may include apertures 15 such that the helicopter 10 may be properly positioned on a launching/landing pad or base (not shown). The base may function both to charge the power supply in the helicopter and to energize the main propeller of the helicopter to a sufficient RPM required for launching the helicopter from the launching base. The launching base may also include batteries and a timer circuit for charging the helicopter and may have a separate motor for energizing the main propeller. The charger may either be equipped to turn off after a certain amount of time or until the battery reaches a certain voltage.

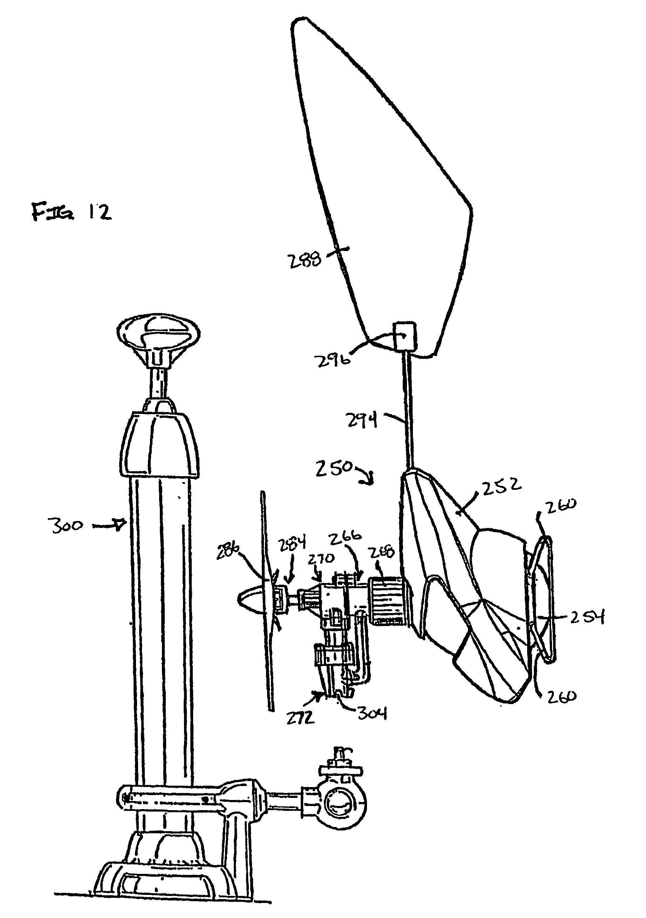

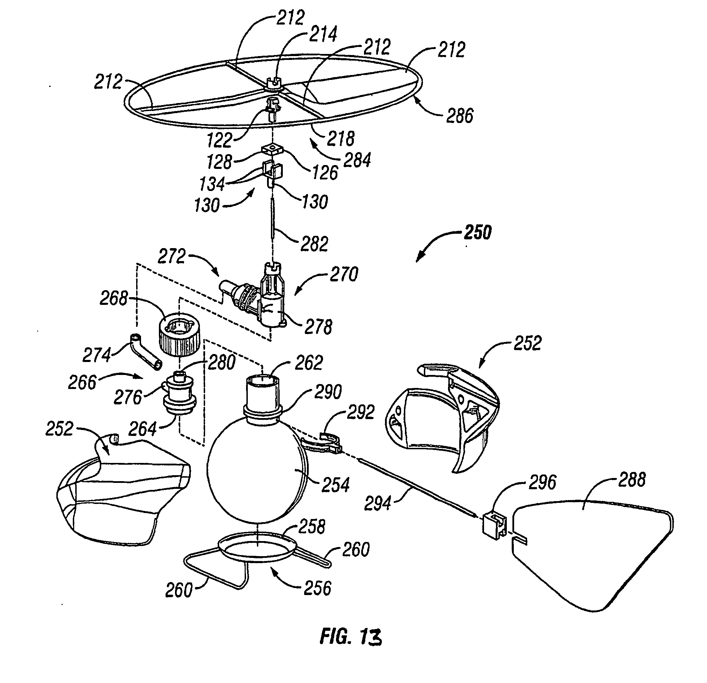

As mentioned above, the is also a continuing need to provide alternate means of powering the propeller related vehicles, and one additional or alternate means includes a pneumatic operated propeller related vehicle, such as illustrated in FIGS. 12-13. Referring now to FIGS 12 and 13, a second helicopter embodiment 250 is illustrated. The second helicopter embodiment 250 includes an outer housing 252 that houses a reservoir 254 to hold a pressurized fluid. The reservoir 254 is secured to or rests upon a chassis 256, which has an upper portion 258 that is secured within the housing 252. Also attached to the chassis 256 are landing skids 260 such that the helicopter 250 may rest on a given surface.

The reservoir 254 includes an open end 262 that receives one end 264 of an inlet assembly 266. The inlet assembly 266 is secured to the open end 262 by a cap 268. A pneumatic motor mechanism 270 includes an intake manifold 272 that may be attached to an outside pump (shown in FIG. 12). The air entering the intake manifold 272 will, first, pass through a tube 274 that is attached to a first opening 276 defined in the inlet assembly 266 and then passes into the reservoir 254 via its open end 262. As the user continues to force or pump air into the reservoir 254 the air inside the reservoir 254 will then pressurize. A pneumatic motor 278 secured to the intake manifold 272 is also in fluid communication with the reservoir 254 via a second opening 280 defined in the inlet assembly 266. The air flow entering and exiting the reservoir 254 is controlled through various well known valves (not shown) contained within the intake manifold 272, the pneumatic motor 278 and/or the inlet assembly 266. The pneumatic motor 278 uses the pressurized fluid contained in the reservoir 254 to rotate a main drive shaft 282.

The main drive shaft 282 is connected to a stabilizing means 284, which is further connected or secured to a main propeller 286. The stabilizing means 284 and the main propeller 286 may be any of the stabilizing means or main propeller embodiments previously mentioned. As illustrated in FIGS. 12 and 13 the stabilizing means 284 is preferably the third stabilizing means illustrated in FIGS. 6a and 6b and the main propeller 286 is preferably the sixth main propeller embodiment illustrated in FIG. 11.

Continuing to refer to FIGS. 12 and 13, the stabilizing means 284 (similar to the third stabilizing means from FIGS. 6a and 6b) includes a freely pivotal rotor attachment 122 that permits the main propeller 286 to pivot about its center of rotation. In addition, the rest of the helicopter 250, below the rotor attachment 122, can pivot as a pendulum. The rotor attachment 288 includes clips 124 to frictionally engage a center portion of the propeller 286. The rotor attachment 122 is pivotally attached to a pivot joint 126 by a first pivot pin 128, which permits the rotor attachment 122 to pivot in a first pivot direction. The pivot joint 126 is also secured to a U-shaped portion 132, defined by a yoke 130, by a pair of pivot pins 134 and in a second pivot direction.

It is important to note that the main propeller 286 is preferably mounted to the rotor attachment 122 such that the main propeller blades 212 are parallel to the first pivot direction about the first pivot pin 128. This allows the main propeller 286 to pivot in the same direction as the blades 212, so the blades 212 when pitching or banking help self-regulate the main propeller 286. Furthermore, the first and second pivot directions are preferably perpendicular to each other to allow the main propeller 286 to pivot perpendicularly from the helicopter 250.

Also attached to the helicopter 250 is a vertical rudder 288, which is clipped by a reservoir clip 292 onto a neck 290, defined on the reservoir 254. The reservoir clip 292 is attached to a horizontal beam 294 that extends outwardly. The beam 294 is secured to a rudder clip 296 that attaches to the vertical rudder 288.

When the main propeller 286 rotates, the rotating main propeller 286 with the weight of the safety ring 218 and crossbars 212 creates a normal centrifugal force. If the main propeller 286 begins to pitch, the stabilizing means 284 along with this normal centrifugal force creates a gyroscopic effect that causes the main propeller 286 to level out. The leveling out effect is achieved when the main propeller 286 begins to pivot about the first pivot direction. The main propeller 286 will pivot along a changing pitch (created in the gyroscopic effect) such that the main propeller 286 returns to rotating in a substantially horizontal plane; thereby stabilizing the helicopter 250 horizontally, keeping it level. Similarly, if the body of the helicopter 250 (below the stabilizing means 284) begins to sway, the stabilizing mean 284 will similarly compensate and return the helicopter 250 to a substantially horizontal position. As such, the present invention provides a novel mechanical means for compensating for any change in the horizontal position of the helicopter without the need for expensive servos and programming.

During operation, the second helicopter embodiment 250 will lift straight up and maintain a hover or stationary position. The helicopter 250 may include several forms of control, starting with no control or "free flight," or it may be outfitted with electronics having a microprocessor for "preprogrammed" or "programmable" flight or it may be outfitted with a radio receiver for use with a hand held remote transmitter or it may be any combination of the above.

To operate the helicopter 250, a user must first fill the reservoir 254 with pressurized air. The user may use an external pump 300, such as illustrated in FIG. 12, by securing an outlet 302 defined by the pump 300 to an inlet 304 on the intake manifold 272. The user may then begin to pump air into and pressurize air contained in the reservoir 254. Once the reservoir 254 contains a sufficient amount of pressurized air, the user detaches the helicopter 250 from the pump 300 and initiates the pneumatic motor 278 by initially rotating the main propeller 286. However, it could be contemplated that the main propeller 286 will start automatically once the reservoir 254 contains pressurized fluid. The helicopter 250 will use the pressurize fluid to rotate the main propeller 286 and lift off of the ground or away from the user. In free flight, the helicopter 286 will continue to rise and maintain a substantially horizontal orientation without banking or pitching too much because of the stabilizing means. Once the fluid inside the reservoir 254 is depleted, the propeller 286 will continue to rotate slower and slower as the momentum decreases. This permits the helicopter 250 to glide back down to the ground.

## Claims

1. A helicopter (10) having an airframe housing (12), a motor mechanism (30) for powering a main propeller (20) attached to a main drive shaft (46) that extends vertically through the airframe (12), and
a horizontal stabilizing means (50) attached between the main propeller (20) and the main drive shaft (46), which permits the main propeller (20) to freely pivot about the main drive shaft (46) independently from the airframe (12)
wherein when the main propeller (20) is rotating and the main propeller (20) begins to pitch, the rotating main propeller (20) having a centrifugal force created by the rotation thereof will tend to pivot about the horizontal stabilizing means (50) in a manner that offsets the pitch such that the helicopter (10) remains in a substantially horizontal position;
**characterized in that** the horizontal stabilizing means (50) includes a main rotor head (82) pivotally secured to a rotor mount (86), the main rotor head (82) being secured to the main drive shaft (46) and comprises a first U-shaped joint extending upwardly from the main drive shaft (46), and the rotor mount (86) being secured to the main propeller (20) and comprises a second U-shaped joint extending downwardly from the main propeller (20), a pivot pin (88) pivotally connects the main rotor head (82) to the rotor mount (86) such that the main propeller (20) is freely pivotally attached to the main drive shaft (46).

2. The helicopter of claim 1 further comprising a means (44d, 78) for internally cooling the airframe (12) defined by having a plurality of vents positioned in the airframe and a combo gear (44) defined by having an outside gearing (44b) and a crown gearing (44c), the combo gear (44) being in communication with the motor mechanism (30), the combo gear (44) having a plurality of cooling blades (44d) positioned such that when the combo gear (44) rotates the cooling blades (44d) draw air through the plurality of vents (78) into the airframe (12).

3. The helicopter of claim 1, wherein the horizontal stabilizing means (100) exerts a reactionary force on the main propeller (20) when the main propeller pivots in relation to the drive shaft (46), wherein the reactionary force tends to place the main propeller (20) in a substantially horizontal position.

4. The helicopter of claim 3, wherein
the first U-shaped joint (102) has a pair of legs (104), each leg (104) including an end (106) that is substantially rounded;
the pivot pin (110) pivotally attaches the second U-shaped joint (108) to the first U-shaped joint (102) such that the ends of each leg (104) of the first U-shaped joint (102) is positioned substantially toward the main propeller (20); and
wherein there is provided
a resilient O-ring (112) positioned between the ends (106) of the first U-shaped joint (102) and the main propeller (20) whereby the resilient O-ring (112) exerts said reactionary force on the main propeller (20) when the main propeller (20) pivots in relation to the drive shaft (46) such that the reactionary force tends to return the main propeller (20) to the substantially horizontal position.

5. The helicopter of any of claims 1-4, wherein the main propeller (20) includes:
a pair of blades (90) extending outwardly from the horizontal stabilizing means, each blade (90) having a leading edge (94), a proximal end defined as an end proximal to the horizontal stabilizing means (50), and a distal end (96); and
a safety arc (92) attached to the proximal and distal ends (96) of each blade (90) and positioned in front of the leading edge (94) of each blade (90).

6. The helicopter of claim 5, wherein the safety arc (92) has a diameter that transitions from a relatively flat horizontal surface by the proximal end into a wider vertical surface by the distal end (96).

7. The helicopter of any of claims 1-4, wherein the main propeller (140) includes:
a pair of blades (90) extending outwardly from the horizontal stabilizing means along a horizontal plane, each blade (90) having a leading edge (94), a proximal end defined as an end proximal to the horizontal stabilizing means and a distal end;
a safety arc (92) attached to the proximal and distal ends of each blade (90) and positioned in front of the leading edge of each blade; and
a pair of flybars (144) extending outwardly from the horizontal stabilizing means along said horizontal plane, wherein when the main propeller (140) is rotating and the main propeller begins to pitch, the flybars (144) having an increased centrifugal force created by the rotation thereof will tend to pivot the blades (90) about the horizontal stabilizing means in a manner that offsets the pitch such that the helicopter (10) remains in a substantially horizontal position.

8. The helicopter (10) of any of claims 1-4, wherein the main propeller (150) includes:
a crossbar joint (160) that is secured to the horizontal stabilizing means;
a pair of blades (90) pivotally extending outwardly along a horizontal plane from the crossbar joint (160), each blade (90) having an end proximal to the crossbar joint (160) and a distal end;
a pair of crossbars (158) extending outwardly from the crossbar joint (160) along the horizontal plane, each crossbar (158) having and end proximal secured to the crossbar joint (160) and a distal end;
a circular safety ring (152) secured to the distal ends of each crossbar (158) and having pivots (162) for receiving the distal ends (96) of each blade (90); and
a flybar (154) extending outwardly both from a leading edge and a trailing edge defined in each blade (90), each flybar (154) extending along said horizontal plane, wherein the main propeller (150) is rotating and the main propeller (150) begins to pitch, the flybars (154) having an increased centrifugal force created by the rotation thereof will tend to pivot the blades (90) about the horizontal stabilizing means in a manner that offsets the pitch such that the helicopter (10) remains in a substantially horizontal position.

9. The helicopter (10) of any of claims 1-4, wherein the main propeller (170) includes:
two pairs of blades (172a, 172b) pivotally extending outwardly along a horizontal plane from the horizontal stabilizing means, such that one pair of blades (172a) is perpendicular to the other pair of blades (172b), each blade (172) having an end proximal t o the horizontal stabilizing means and a distal end:
a circular safety ring (174) having pivots (178) for receiving the distal ends of each blade (172); and
a flybar (176) extending outwardly from a leading edge (184) defined in each blade (172), wherein when the main propeller (170) is rotating and the main propeller (170) begins to pitch, the flybars (176) having an increased centrifugal force created by the rotation thereof will tend to pivot the blades (172) about the horizontal stabilizing means in a manner that offsets the pitch such that the helicopter (10) remains in a substantially horizontal position.

10. The helicopter of claims 7, 8 or 9, wherein the flybars include weighted ends (186) to increase the centrifugal force created by the rotation thereof.

11. A helicopter according to any preceding claim, wherein
the airframe housing further includes a reservoir (254) for pressurised air,
said motor mechanism (270) being pneumatic and utilizing the pressurized air from within the reservoir (254) to rotate the main drive shaft.

12. The helicopter of claim 11, wherein the pneumatic motor mechanism includes:
an intake manifold (272) in communication with the reservoir (254), the intake manifold (272) permitting air to enter into the reservoir (254) from an outside source.

13. The helicopter of claim 12, further comprising an external pumping means that is attachable to the intake manifold (272) for pumping air into and pressurizing the air inside the reservoir (254).

## Patentansprüche

1. Hubschrauber (10) mit einem Zellengehäuse (12), einer Motormechanik (30) zum Antrieb eines Hauptpropellers (20), der auf eine Hauptantriebswelle (46) aufgesetzt ist, die vertikal durch die Zelle (12) verläuft, und einer Horizontal-Stabilisierungsvorrichtung (50), die zwischen den Hauptpropeller (20) und die Hauptantriebswelle (46) eingefügt ist und dem Hauptpropeller (20) ermöglicht, unabhängig von der Zelle (12) frei um die Hauptantriebswelle (46) zu schwenken,
wobei, wenn bei drehendem Hauptpropeller (20) dieser anzustellen beginnt, seine Drehung eine Zentrifugalkraft bewirkt, die ihn um die Horizontal-Stabilisierungsvorrichtung (50) so schwenken will, dass die Anstellung ausgeglichen wird und der Hubschrauber (10) in einer im wesentlichen horizontalen Lage verbleibt,
**dadurch gekennzeichnet, dass** die Horizontal-Stabilisierungsvorrichtung (50) einen Haupt-Rotorkopf (82) aufweist, der schwenkbar an einer Rotorlagerung (86) befestigt ist, dass der Haupt-Rotorkopf (82) an der Hauptantriebswelle (46) befestigt ist und ein erstes U-förmiges Gelenk aufweist, das von der Hauptantriebswelle (46) aufwärts ragt, und dass die Rotorlagerung (86) am Hauptpropeller (20) befestigt ist und ein zweites U-förrruges Gelenk aufweist, das vom Hauptpropeller (20) abwärts vorsteht, wobei ein Schwenkstift (88) den Hauptrotorkopf (82) schwenkbar mit der Rotorlagerung (86) so verbindet, dass der Hauptpropeller (20) frei schwenkbar mit der Hauptantriebswelle (46) verbunden ist.

2. Hubschrauber nach Anspruch 1, weiterhin mit einer zum internen Kühlen der Zelle (12) vorgesehenen Einrichtung (44d, 78), die eine Vielzahl von Lüftungsöffnungen in der Zelle und ein Combo-Zahnrad (44) mit einer Außenzahnung (44b) und einer Kronenzahnung (44c) aufweist, wobei das Combo-Zahnrad (44) in Verbindung mit der Motormechanik (30) steht und eine Vielzahl von Kühlflügeln (44d) aufweist, die so angeordnet sind, dass bei drehendem Combo-Zahnrad (44) die Kühlflügel (44d) Luft durch die Vielzahl von Lüftungsöffnungen (78) in die Zelle (12) ziehen.

3. Hubschrauber nach Anspruch 1, bei dem die Horizontal-Stabilisierungsvorrichtung (100) auf den Hauptpropeller (20), wenn dieser relativ zur Antriebswelle (46) schwenkt, eine Reaktionskraft ausübt, die den Hauptpropeller (20) in einer im wesentlichen horizontalen Lage halten will.

4. Hubschrauber nach Anspruch 3, bei dem
das erste U-förmige Gelenk (102) ein Paar Schenkel (104) mit jeweils einem im wesentlichen abgerundeten Ende (106) hat;
ein Schwenkstift (110) das zweite U-förmige Gelenk (108) am ersten U-förmigen Gelenk (102) so festlegt, dass die Enden der Schenkel (104) des ersten U-förmigen Gelenks (102) im wesentlichen zum Hauptpropeller (20) weisen; und
zwischen den Enden (106) des ersten U-förmigen Gelenks (102) und dem Hauptpropeller (20) ein elastischer O-Ring (112) vorgesehen ist und dieser die Reaktionskraft auf den Hauptpropeller (20) ausübt, wenn letzterer relativ zur Antriebswelle (46) schwenkt, so dass die Reaktionskraft den Hauptpropeller (20) in die im wesentlichen horizontale Lage zurückführen will.

5. Hubschrauber nach einem der Ansprüche 1-4, dessen Hauptpropeller (20) aufweist:
ein Paar Flügel (90), die von der Horizontal-Stabilisierungsvorrichtung weg auswärts verlaufen und jeweils eine Vorderkante (94), ein - als proximal zur Horizontal-Stabilisierungsvorrichtung (50) definiertes - proximales Ende und ein distales Ende (96) aufweisen; und
einen Sicherheitsbügel (92), der an das proximale und das distale Ende (96) jedes Flügels (90) angesetzt ist und vor der Vorderkante (94) jedes Flügels (90) liegt.

6. Hubschrauber nach Anspruch 5, dessen Sicherheitsbügel (92) jeweils entlang des Umfangs von einer verhältnismäßig flachen horizontalen Fläche am proximalen zu einer breiteren vertikalen Fläche am distalen Ende (96) übergehen.

7. Hubschrauber nach einem der Ansprüche 1-4, dessen Hauptpropeller (140) aufweist:
ein Paar Flügel (90), die von der Horizontal-Stabilisierungsvorrichtung in einer Horizontalebene auswärts verlaufen und jeweils eine Vorderkante (94), ein als zur Horizontal-Stabilisierungsvorrichtung proximal definiertes - proximales Ende und ein distales Ende aufweisen;
einen Sicherheitsbügel (92), der an das proximale und das distale Ende jedes Flügels (90) angesetzt ist und vor der Vorderkante des jeweiligen Flügels liegt; und
ein Paar Flybars (144), die von der Horizontal-Stabilsierungsvorrichtung in der Horizontalebene auswärts wegverlaufen, wobei, wenn der Hauptpropeller dreht und anzustellen beginnt, die Flybars (144) unter der durch ihre Drehung verursachten zunehmenden Zentrifugalkraft die Flügel (90) um die Horizontal-Stabilisierungsvorrichtung so schwenken wollen, dass die Anstellung ausgeglichen wird und der Hubschrauber (10) in einer im wesentlichen horizontalen Lage verbleibt.

8. Hubschrauber (10) nach einem der Ansprüche 1-4, deren Hauptpropeller (150) aufweist:
ein Kreuzstabgelenk (160), das an der Horizontal-Stabilisierungsvorrichtung befestigt ist;
ein Paar Flügel (90), die vom Kreuzstabgelenk (160) weg schwenkbar in einer Horizontalebene verlaufen und jeweils ein zum Kreuzstabgelenk (160) proximales und ein distales Ende aufweisen;
ein Paar Kreuzstäbe (158), die vom Kreuzstabgelenk (160) weg in der Horizontalebene verlaufen und jeweils ein am Kreuzstabgelenk (160) befestigtes proximales und ein distales Ende aufweisen;
einen kreisrunden Sicherheitsring (152), der an den distalen Enden der Kreuzstäbe (158) befestigt ist und Schwenklager (162) zur Aufnahme der distalen Enden (96) der Flügel (90) aufweist; und
einen Flybar (154), der jeweils von sowohl einer Vorder- als auch einer Hinterkante jedes Flügels auswärts weg verläuft und sich in der Horizontalebene erstreckt, wobei, wenn der Hauptpropeller (150) dreht und anzustellen beginnt, die Flybars (154) unter der durch ihre Drehung verursachten zunehmenden Zentrifugalkraft die Flügel (172) um die Horizontal-Stabilisierungsvorrichtung so schwenken wollen, dass die Anstellung ausgeglichen wird und so der Hubschrauber (10) in einer im wesentlichen horizontalen Lage verbleibt.

9. Hubschrauber (10) nach einem der Ansprüche 1-4, dessen Hauptpropeller (170) aufweist:
zwei Paare Flügel (172a, 172b), die in einer Horizontalebene von der Horizontal-Stabilisierungsvorrichtung weg auswärts so verlaufen, dass die Flügel (172a) des einen Paares rechtwinklig zu den Flügeln (172b) des anderen Paares liegen, wobei jeder Flügel (172) ein zur Horizontal-Stabilisierungsvorrichtung proximales und ein distales Ende hat;
einen kreisrunden Sicherheitsring (174) mit Schwenklagern (178) zur Aufnahme der distalen Enden jedes der Flügel (172); und
Flybars (176), die von einer Vorderkante (184) jedes Flügels (172) auswärts abstehen, wobei wenn der Hauptpropeller (170) dreht und anzustellen beginnt, die Flybars (176) unter der durch ihre Drehung verursachten zunehmenden Zentrifugalkraft die Flügel (172) um die Horizontal-Stabilisierungsvorrichtung so schwenken wollen, dass die Anstellung ausgeglichen wird und der Hubschrauber (10) in einer im wesentlichen horizontalen Lage verbleibt.

10. Hubschrauber nach Anspruch 7, 8 oder 9, dessen Flybars beschwerte Enden (186) aufweisen, um die von ihrer Drehung erzeugte Zentrifugalkraft zu erhöhen.

11. Hubschrauber nach einem der vorgehenden Ansprüche, bei dem das Zellengehäuse weiterhin ein Reservoir (254) für druckbeaufschlagte Luft aufweist und die Motormechanik (270) pneumatisch arbeitet und die druckbeaufschlagte Luft aus dem Reservoir (254) zum Drehen der Hauptantriebswelle nutzt.

12. Hubschrauber nach Anspruch 11, dessen pneumatische Motormechanik einen Einlassverteiler (272) aufweist, der in Strömungsverbindung mit dem Reservoir (254) steht und ermöglicht, Luft aus einer externen Quelle in das Reservoir (254) einzulassen.

13. Hubschrauber nach Anspruch 12 weiterhin mit einer externen Pumpvorrichtung, die an den Einlassverteiler (272) anschließbar ist, um Luft in das Reservoir (254) zu pumpen und dort unter Druck zu setzen.

## Revendications

1. Hélicoptère (10) ayant une enveloppe de cellule (12), un mécanisme de moteur (30) pour actionner une hélice principale (20) reliée à un arbre d'entraînement principal (46) qui s'étend verticalement à travers la cellule (12), et
des moyens de stabilisation horizontale reliés entre l'hélice principale (20) et l'arbre d'entraînement principal (46), qui permettent à l'hélice principale (20) de pivoter librement autour de l'arbre d'entraînement principal (46) indépendamment de la cellule (12),
dans lequel, lorsque l'hélice principale (20) tourne et que l'hélice principale (20) commence à tanguer, l'hélice principale en rotation (20) ayant une force centrifuge créée par sa rotation aura tendance à pivoter autour des moyens de stabilisation horizontale (50) d'une manière qui décale l'inclinaison de telle sorte que l'hélice (10) reste dans une position sensiblement horizontale ;
**caractérisé en ce que** les moyens de stabilisation horizontale (50) comportent une tête de rotor principal (82) fixée de manière pivotante sur une monture de rotor (86), la tête de rotor principal (82) étant fixée à l'arbre d'entraînement principal (46) et comporte une première articulation en forme de U s'étendant vers le haut à partir de l'arbre d'entraînement principal (46), et la monture de rotor (86) étant fixée à l'hélice principale (20) et comporte une seconde articulation en forme de U s'étendant vers le bas à partir de l'hélice principale (20), un axe de pivotement (88) relie de manière pivotante la tête de rotor principal (82) à la monture de rotor (86) de telle sorte que l'hélice principale (20) est reliée de manière librement pivotante à l'arbre d'entraînement principal (46).

2. Hélicoptère selon la revendication 1, comportant de plus des moyens (44d, 78) pour refroidir intérieurement la cellule (12) définis en ayant une pluralité de trous d'aération positionnés dans la cellule et une roue dentée combinée (44) défini en ayant un engrenage extérieure (44b) et un engrenage en couronne (44c), la roue dentée combinée (44) étant en communication avec le mécanisme de moteur (30), la roue dentée combinée (44) ayant une pluralité de pales de refroidissement (44d) positionnées de telle sorte que lorsque la roue dentée combinée (44) tourne, les pales de refroidissement (44d) attirent de l'air dans la cellule (12) à travers la pluralité de trous d'aération (78).

3. Hélicoptère selon la revendication 1, dans lequel les moyens de stabilisation horizontale (100) exercent une force de réaction sur l'hélice principale (20) lorsque l'hélice principale pivote par rapport à l'arbre d'entraînement (46), dans lequel la force de réaction a tendance à placer l'hélice principale (20) dans une position sensiblement horizontale.

4. Hélicoptère selon la revendication 3, dans lequel
la première articulation en forme de U (102) a une paire de pieds (104), chaque pied (104) comportant une extrémité (106) qui est sensiblement arrondie ;
l'axe de pivotement (110) relie de manière pivotante la seconde articulation en forme de U (108) à la première articulation en forme de U (102), de telle sorte que les extrémités de chaque pied (104) de la première articulation en forme de U (102) sont positionnées sensiblement vers l'hélice principale (20) ; et dans lequel est prévu
un joint torique élastique (112) positionné entre les extrémités (106) de la première articulation en forme de U (102) et l'hélice principale (20), grâce à quoi le joint torique élastique (112) exerce ladite force de réaction sur l'hélice principale (20) lorsque l'hélice principale (20) pivote par rapport à l'arbre d'entraînement (46) de sorte que la force de réaction a tendance à ramener l'hélice principale (20) vers la position sensiblement horizontale.

5. Hélicoptère selon l'une quelconque des revendications 1 à 4, dans lequel l'hélice principale (20) comporte :
une paire de pales (90) s'étendant vers l'extérieur à partir des moyens de stabilisation horizontale, chaque pale (90) ayant un bord d'attaque (94), une extrémité proximale définie comme une extrémité qui est proximale par rapport aux moyens de stabilisation horizontale (50), et une extrémité distale (96) ; et
un arc de sécurité (92) relié aux extrémités proximale et distale (96) de chaque pale (90) et positionné à l'avant du bord d'attaque (94) de chaque pale (90).

6. Hélicoptère selon la revendication 5, dans lequel l'arc de sécurité (92) a un diamètre qui fait une transition d'une surface horizontale relativement plate par l'extrémité proximale à une surface verticale plus large par l'extrémité distale (96).

7. Hélicoptère selon l'une quelconque des revendications 1 à 4, dans lequel l'hélice principale (140) comporte :
une paire de pales (90) s'étendant vers l'extérieur à partir des moyens de stabilisation horizontale le long d'un plan horizontal, chaque pale (90) ayant un bord d'attaque (94), une extrémité proximale définie comme une extrémité qui est proximale par rapport aux moyens de stabilisation horizontale et une extrémité distale ;
un arc de sécurité (92) relié aux extrémités proximale et distale de chaque pale (90) et positionné à l'avant du bord d'attaque de chaque pale ; et
une paire de balanciers (144) s'étendant vers l'extérieur à partir des moyens de stabilisation horizontale le long dudit plan horizontal, dans lequel lorsque l'hélice principale (140) tourne et que l'hélice principale commence à tanguer, les balanciers (144) ayant une force centrifuge accrue créée par leur rotation tendront à faire pivoter les pales (90) autour des moyens de stabilisation horizontale d'une manière qui décale l'inclinaison de telle sorte que l'hélicoptère (10) reste dans une position sensiblement horizontale.

8. Hélicoptère (10) selon l'une quelconque des revendications 1 à 4, dans lequel l'hélice principale (150) comporte :
une articulation de traverses (160) qui est fixée aux moyens de stabilisation horizontale ;
une paire de pales (90) s'étendant de manière pivotante vers l'extérieur le long d'un plan horizontal à partir de l'articulation de traverse (160), chaque pale (90) ayant une extrémité qui est proximale par rapport à l'articulation de traverse (160) et une extrémité distale ;
une paire de traverses (158) s'étendant vers l'extérieur à partir l'articulation de traverses (160) le long du plan horizontal, chaque traverse (158) ayant une extrémité qui est proximale fixée à l'articulation de traverse (160) et une extrémité distale,
un anneau de sécurité circulaire (152) fixé aux extrémités distales de chaque traverse (158) et ayant des pivots (162) pour recevoir les extrémités distales (96) de chaque pale (90) ; et
un balancier (154) s'étendant vers l'extérieur à partir à la fois d'un bord d'attaque et d'un bord de fuite définis dans chaque pale (90), chaque balancier (154) s'étendant le long dudit plan horizontal, dans lequel l'hélice principale (150) tourne et l'hélice principale (150) commence à tanguer, les balanciers (154) ayant une force centrifuge accrue créée par leur rotation tendront à faire pivoter les pales (90) autour des moyens de stabilisation horizontale d'une manière qui décale l'inclinaison de telle sorte que l'hélicoptère (10) reste dans une position sensiblement horizontale.

9. Hélicoptère (10) selon l'une quelconque des revendications 1 à 4, dans lequel l'hélice principale (70) comporte :
deux paires de pales (172a, 172b) s'étendant de manière pivotante vers l'extérieur le long d'un plan horizontal à partir des moyens de stabilisation horizontale, de telle sorte qu'une paire de pales (172a) est perpendiculaire à l'autre paire de pales (172b), chaque pale (172) ayant une extrémité qui est proximale par rapport aux moyens de stabilisation horizontale et une extrémité distale :
un anneau de sécurité circulaire (174) ayant des pivots (178) pour recevoir les extrémités distales de chaque pale (172) ; et
un balancier (176) s'étendant vers l'extérieur à partir d'un bord d'attaque (184) défini dans chaque pale (72), dans lequel lorsque l'hélice principale (170) tourne et que l'hélice principale (170) commence à tanguer, les balanciers (176) ayant une force centrifuge accrue créée par leur rotation tendront à faire pivoter les pales (172) autour des moyens de stabilisation horizontale d'une manière qui décale l'inclinaison de telle sorte que l'hélicoptère (10) reste dans une position sensiblement horizontale.

10. Hélicoptère selon les revendications 7, 8 ou 9, dans lequel les balanciers comportent des extrémités lestées (186) pour augmenter la force centrifuge créée par leur rotation.

11. Hélicoptère selon l'une quelconque des revendications précédentes, dans lequel
l'enveloppe de cellule comporte de plus un réservoir (254) d'air sous pression,
ledit mécanisme de moteur (270) étant pneumatique et utilisant l'air sous pression provenant de l'intérieur du réservoir (254) pour faire tourner l'arbre d'entraînement principal.

12. Hélicoptère selon la revendication 11, dans lequel le mécanisme de moteur pneumatique comporte :
un collecteur d'admission (272) en communication avec le réservoir (254), le collecteur d'admission (272) permettant à de l'air d'entrer dans le réservoir (254) en provenance d'une source extérieure.

13. Hélicoptère selon la revendication 12, comportant de plus des moyens de pompage externes qui peuvent être reliés au collecteur d'admission (272) pour pomper de l'air dans le réservoir et pour mettre l'air sous pression à l'intérieur de celui-ci (254).
